# EUROPEAN PATENT SPECIFICATION

(11) **EP 2 467 008 B1**
(45) Date of publication and mention of the grant of the patent: **26.06.2013**
(21) Application number: 10744557.9
(22) Date of filing: 11.08.2010
(51) Int. Cl.: A01F 15/08

(54) **A METHOD FOR CONTROLLING A SQUARE BALER**
VERFAHREN ZUR STEUERUNG EINER QUADRATBALLENPRESSE
PROCÉDÉ DE CONTRÔLE D'UNE PRESSE À BALES CARRÉES

(30) Priority: 20.08.2009 BE 200900511
(43) Date of publication of application: 27.06.2012
(73) Proprietor: CNH Belgium N.V., 8210 Zedelgem (BE)
(72) Inventor: VAN GROENIGEN, Jan, B-8490 Varsenare (BE)
(74) Representative: CNH IP Department
(86) International application number: PCT/EP2010/061690
(87) International publication number: WO 2011/020754

(56) References cited:
- EP-A1- 1 604 565

## Description

### Technical Field

The present invention relates to control of a square baler (See e.g. EP 1 604 565 A1).

### Background Art

Balers are machines that pick-up crop that has been deposited in windrows or swathes and compact it into bales. The crop may be, for example, straw that has been deposited by a combine harvester or grass cut by a mowing machine. The balers themselves can be self-propelled or towed by a tractor. The present invention is concerned only with square balers but is not restricted to any particular crop.

A square baler has a pick-up mechanism for picking up the crop from the ground, a crop transport mechanism and a baling chamber. The transport mechanism in a square baler comprises an intake duct that acts as a pre-compression chamber into which the crop is introduced by a rotor and in which the crop is pre-compressed by a packer. Sometimes a cutter is provided at the lower end of the intake duct to chop the crop before it is formed into bales.

When a slice has been pre-compressed in the intake duct, a so-called stuffer is actuated to upload the contents of the intake duct into a square baling chamber where it is compressed further to form a bale. The bale is built up in slices in this way until the desired length is reached.

The compression of the crop in the baling chamber is carried out by a constantly reciprocating plunger which pushes the bale being formed against a resistance offered by a previously formed bale that is in the process of being ejected from the baling chamber.

Prior to uploading of the first slice into the baling chamber from the intake duct, lengths of twine drawn from supply reels are placed vertically in the path of the bale. As the bale increases in size, runs of the twine extend along the top and bottom faces of the bale as well as its front face. The length of the bale in progress is determined by a known bale length sensor. To bind a bale after it has reached the desired size, a needle assembly raises the lower runs of the twines through channels in the face of the plunger. The top and bottom runs are then together fed into knotters which tie knots to form complete loops of twine encircling the bale. The twines are then severed from the supply reels and further knots are made to produce the earlier mentioned vertical runs for the next bale. The design of the needle assembly and of the knotters is well known and documented and need not be explained in further detail in the present context. It suffices to realise that after a bale has reached its desired size, a control system initiates a knotting cycle which ties off the bale and commences a new one.

Because of the height of the baling chamber, allowing the completed bales to fall onto the ground would risk their being damaged. The baler is therefore provided at its trailing end with an inclined discharge chute that lowers the completed bales more gently onto the ground. The discharge chute, which can be in several sections, is capable of being raised from its generally horizontal deployed position, to a generally vertical stowage position. The chute needs to be raised to permit its transportation from one field to another and, in the raised position, it also closes off the baling chamber.

Because the bale in progress is used to push the last completed bale out of the baling chamber, there will normally be a bale protruding from the baling chamber at the time that it is desired to raise the discharge chute. To allow bales to be ejected at the end of a job, when there is no more crop to push out the last completed bale, balers additionally incorporate a bale ejection system.

A known bale ejection system comprises a hydraulic cylinder acting to reciprocate at least one barb that is slidably mounted in the floor of the baling chamber near its discharge end. When reciprocated, the barb, which may be retractable or pivoted in the manner of a pawl, will catch on the crop material and grip the bale in one direction but not the other. As a result, the last completed bale will be pushed out incrementally until it lies completely outside the baling chamber. It is also known to have two such ejection systems, one at the discharge end of the baling chamber to push out only the last completed bale and the other having a stroke extending as far as the plunger to push out the bale in progress, the latter system being used when it is desired the empty the baling chamber completely.

A problem that can arise is that if the last completed bale at the end of a job only sticks out slightly from the baling chamber at the time that it is desired to raise the discharge chute, extracting the bale from the baling chamber can present difficulties. The engagement of the barb(s) in the bale may not be able to overcome the frictional forces resisting movement of the bale.

Further the problem can arise that the bale in progress at the end of a job has a length which is too limited to form a sufficiently solid bale of an acceptable quality. This can equally lead to problems at attempts to clear the baling chamber with an ejection system.

### Disclosure of Invention

With a view to mitigating the foregoing problem, there is provided according to a first aspect of the present invention a method for controlling a square baler, wherein:
- the length of the bale in progress is determined by a bale length sensor;
- the crop remaining to be baled before completion of a job is predicted by the operator; and
- depending on the prediction and the length of the bale in progress, a control system ensures that all bales completed after the receipt of the prediction signal exceed a predetermined minimum length at the completion of the job.

In the present invention, uniformity of bale size is deliberately sacrificed at the end of a job to ensure that the last completed bale can be removed easily from the baling chamber, so as to permit the discharge chute to be raised. The operator knows the distance that needs to be travelled to pick up the amount of crop material that goes into each completed bale. The operator can therefore readily indicate to the control system when there only remains enough crop material to form, for example, one more complete bale of the desired size. At this time, the control system stops attempting to standardise bale size and instead the control system varies the size of the completed bales to ensure that the bales in the baling chamber at the end of a job are sufficiently long to permit easy ejection.

The operator could simply predict that the amount of crop yet to be picked up matches the desired length of the bale and could instruct an immediate tying off of the bale in progress. This would however lead to the fact that the size of the bale then formed may be too small to form a sufficiently solid and acceptable bale. The control system requires a prediction from the operator, for example a prediction that the amount of crop remaining matches at least one regular sized bale. With the benefit of sufficient advance notice and a knowledge of both the current size of the bale in progress and the amount of crop yet to be picked up, the control system can vary the bale size to achieve the desired easy ejection without allowing the size of any completed bale to drop to an unacceptable level.

In accordance with a second aspect of the invention, there is provided a square baler comprising:
- a tying system for encircling bales with lengths of twine and knotting together the ends of the lengths of twine to complete the formation of the bale;
- a bale length sensor for determining the length of the bale in progress; and
- a control system that comprises means for receiving a signal of the bale length sensor indicative of the length of the bale in progress and that is operative to trigger the tying system to commence a new bale when the bale in progress reaches a predetermined desired length,
characterised in that the control system further comprises means for receiving from the operator a signal predicting the quantity of crop remaining to be baled prior to completion of a job and is operative to trigger the tying system in such a manner that all bales completed after the receipt of the prediction signal exceed a predetermined minimum length at the completion of the job.

Though it would be possible for the control system to produce bales both longer and shorter than the regular size, it is preferred that the bales should not exceed their regular size as this complicates their further handling. To be able it to produce only shorter bales, the control system needs a prediction to be received in good time in advance of the job being complete.

Preferably, the prediction signal is generated by the operator to indicate that the amount of crop remaining to be baled corresponds to at least one bale of the desired size.

### Brief Description of Drawings

The invention will now be described further, by way of example, with reference to the accompanying drawings, in which :
Figure 1 is a schematic representation of parts of a baler with the discharge chute in the deployed position;
Figure 2 is a similar schematic representation of the baler in Figure 1 with the discharge chute on the stowage position; and
Figures 3 to 5 are diagrams representing different possible positions of the last completed bale at the time that an operator predicts that there is only enough crop remaining to form one regular sized bale.

### Mode(s) for Carrying Out the Invention

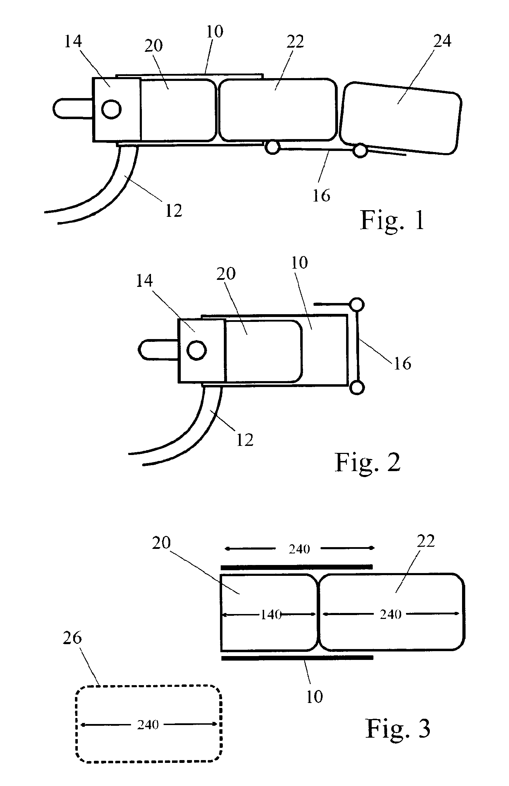

Figures 1 and 2 show diagrammatically the baling chamber 10, the intake duct 12, the plunger 14 and the discharge chute 16 of a square baler. These components are not shown in detail as they are entirely conventional and their construction is not particularly relevant to the invention.

In Figure 1 the discharge chute 16 is shown in its deployed position. Figure 1 also shows a bale 20 in the process of being formed, herein termed the bale in progress, the last completed bale 22, which is partly in the baling chamber 10 and partly on the discharge chute 16, and a previously formed bale 24 about to be dropped onto the ground.

When the baler is to be moved over the road between different fields, the discharge chute 16 is moved into a vertical stowage position shown in Figure 2. Not only does raising the discharge chute 16 shorten the length of the baler to ease its transportation but it also closes off the rear of the baling chamber 10. By comparing Figures 1 and 2, it will be clear that to raise the discharge chute 16, one must first withdraw the last completed bale 22 from the baling chamber.

At the end of a baling job, that is to say when no more crop is being compressed in the baling chamber, the bales cease move to the rear under the action of the plunger. To remove the last completed bale 22, which now sits partly within and partly outside the baling chamber 10, an ejector system is used.

A common ejector system comprises barbs, which may be retractable, that are reciprocated in a fore aft direction by a hydraulic cylinder. The barbs grip the underside of the bale and push it incrementally onto the discharge chute 16. However, the ejector system may not operate correctly if too much of the last completed bale remains within the baling chamber, because it will encounter too much frictional resistance. The present invention aims to ensure that the last completed bale can always be ejected by the ejection system by planning ahead and varying the bale length so that the bale in progress always reaches, or extends beyond, a preferred separation plane at the time that all the crop has been picked up and the baling job at hand has been completed.

During normal baling operation, the control system of the baler aims to make the size of the bales as uniform as possible. Thus the tying system which completes one bale and commences the next is triggered as soon as the bale in progress reaches the desired size. The term "size" refers only to the length of the bales but steps are also taken to control the crop density so as to maintain a uniform weight.

If this control strategy continues to be used until such time as the job at hand is completed, the position of the last completed bale in the bale chamber will be totally random at the time that it is desired to raise the discharge chute 16.

Instead, in the preferred embodiment of the invention now to be described by reference to Figure 3 to 5, the operator provides an indication that the amount of crop yet to be baled is only enough to form one more regular sized bale. This a simple prediction for the operator to make because it corresponds to the distance travelled between the completed bales that have already been lowered onto the ground. If, for example, a bale is formed every fifty metres, then the operator will for example press a button when there only remain fifty metres of crop on the ground before the job at hand is completed.

On receipt of this prediction, the control system switches from its normal strategy of aiming for the bales to be of the same desired size to a strategy that ensures that on completion of the current job it will be possible to withdraw the last completed bale 22 and optionally the bale in progress 20 from the baling chamber 10. The bale or bales completed after receipt of the prediction signal will then have a length that may be different from the regular desired length but they will still not be below an acceptable minimum length.

In the scenarios now to be discussed by reference to Figures 3 to 5, the baling chamber is assumed to be 240cm long, the regular desired bale length is assumed to be 240cm, the minimum bale length is set to 100cm and the optimum length of the bale in progress on completion of the current job is assumed to be 140cm.

In Figure 3, at the time that the operator predicts that the amount of crop 26 still left to bale, represented in dotted lines in the drawing, is enough to form one regular sized bale, the bale in progress is 140cm long. For this scenario, the next completed bale will be of the regular size of 240cm. After a further 100cm of crop have been picked up the bale in progress will have grown to 240cm and will have been tied up. The remaining crop will then create a new bale in progress some 140cm in length pushing the last completed bale to the optimum position for withdrawal by the ejection system.

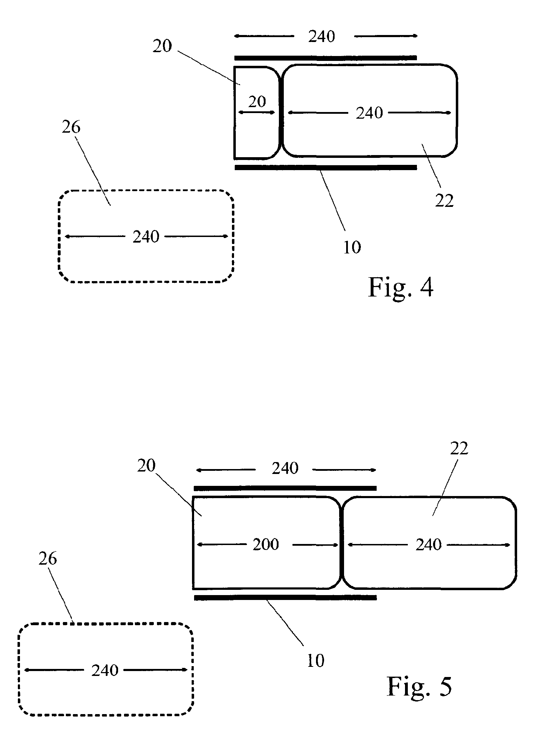

In Figure 4 there is shown the scenario if the bale in progress 20 is only 20cm at the time that the operator's prediction is received by the control system. If the control system were to initiate a tying off operation when the bale in progress 20 reaches 240cm, the amount of crop then picked will grow the new bale in progress to only 20cm resulting in the risk of the last completed bale being jammed in the bale chamber 10 and the new bale of 20cm being too small to form an acceptable bale.

To avoid this problem, if the bale in progress is less than 140cm in length at the time of receipt of the operator's prediction, the control system triggers a tying operation after the bale in progress has increased in length by 100cm despite the fact that the bale will not have reached the desired regular size. In this example, the last completed bale 22 will only have a length of 120cm but its separation plane from the bale in progress 20 will still be at 140cm from the plunger. Withdrawal of the completed bale 22 will not therefore exceed the capacity of the ejection system. Furthermore bale 22 will also be of sufficient length to form an acceptable bale.

The last scenario, where the bale in progress is longer than 140cm (200cm in the illustrated example) can be tackled in one of two ways. The preferred approach is to tie off the bale immediately and to tie off the next bale when it reaches the minimum acceptable length of 100cm. This will result in the bale in progress at the time that the job is completed being 140cm in length. However, at least two irregular sized bales will have been produced, one of 200cm and the other of 100cm. If also the bale in progress is tied off and ejected, it will also be of an irregular size, namely 140cm.

The alternative approach is to tie off the bale in progress when its length reaches 240cm and to continue until all the crop has been picked up to create a new bale in progress that is 200cm in length. This results in less of the completed bales having an irregular length, but the length of the bale in progress at the time that the job is completed will be in excess of 140cm. The bale in progress 20 will be long enough to ensure that the last completed bale 22 and optionally also the bale in progress itself after tying off can be readily withdrawn by the ejector system. In the situation where the bale in progress 20 is not ejected it may be undesirable for other reasons to leave an excessive quantity of crop in the baling chamber on completion of the job at hand.

The invention as defined in the claims is of course not limited to the embodiments described as example and shown in the drawings, but can equally comprise combinations and variations which fall within the scope of the appended claims. In particular, the predicted amount of remaining crop can correspond to more than one regular sized bale. The prediction may be, for example, that there are one and half or two bales remaining to be formed. By giving more advance warning to the control system, it is possible to reduce the extent to which the irregular bales differ from the regular sized bales, by allowing the degree of compensation required to be spread over a larger number of bales.

## Claims

1. A method for controlling a square baler, wherein:
- the length of the bale (20) in progress is determined by a bale length sensor;
- the crop (26) remaining to be baled before completion of a job is predicted by the operator; and
- depending on the prediction and the length of the bale (20) in progress, a control system ensures that all bales completed after the receipt of the prediction signal exceed a predetermined minimum length at the completion of the job.

2. A square baler comprising:
- a tying system for encircling bales with lengths of twine and knotting together the ends of the lengths of twine to complete the formation of the bale;
- a bale length sensor for determining the length of the bale (20) in progress; and
- a control system that comprises means for receiving a signal of the bale length sensor indicative of the length of the bale (20) in progress and that is operative to trigger the tying system to commence a new bale when the bale in progress reaches a predetermined desired length,
**characterised in that** the control system further comprises means for receiving from the operator a signal predicting the quantity of crop (26) remaining to be baled prior to completion of a job and is operative to trigger the tying system in such a manner that all bales completed after the receipt of the prediction signal exceed a predetermined minimum length at the completion of the job.

3. A square baler as claimed in claim 2, **characterised in that** the control system is further operative to trigger the tying system in such a manner that all bales completed after receipt of the prediction signal do not exceed the predetermined desired length.

4. A square baler as claimed in claim 2 or 3, **characterised in that** the prediction signal is generated by the operator to indicate that the amount of crop (26) remaining to be baled corresponds to one bale of the predetermined desired length.

5. A square baler as claimed in claim 4, **characterised in that** if the bale (20) in progress is shorter than the predetermined minimum length at the time that the control system receives the prediction signal, the control system is operative to trigger the tying system when the bale (20) in progress has increased in length by a predetermined value.

6. A square baler as claimed in claim 4 or 5, **characterised in that** if the bale (20) in progress is longer than the predetermined minimum length at the time that the control system receives the prediction signal, the control system is operative to trigger the tying system immediately and to trigger the tying system a second time when the new bale in progress reaches a length corresponding to the predetermined minimum length.

7. A square baler as claimed in claim 4 or 5, **characterised in that** if the bale (20) in progress is longer than the predetermined minimum length at the time that the control system receives the prediction signal, the control system is operative to trigger the tying system when the bale in progress attains the predetermined desired length.

## Patentansprüche

1. Verfahren zur Steuerung einer Rechteck-Ballenpresse, bei dem:
- die Länge des derzeit geformten Ballens (20) durch einen Ballenlängen-Sensor bestimmt wird;
- das Erntematerial (20), das vor dem Abschluss einer Arbeitsauftrags noch zu einem Ballen zu formen ist, durch den Fahrer vorhergesagt wird; und
- in Abhängigkeit von der Vorhersage und der Länge des derzeit geformten Ballens ein Steuersystem sicherstellt, das alle Ballen, die nach dem Empfang des Vorhersagesignals fertiggestellt werden, eine vorgegebene minimale Länge bei Abschluss des Arbeitsauftrags aufweisen.

2. Rechteck-Ballenpresse, mit:
- einem Knüpfersystem zum Umschlingen von Ballen mit Längenabschnitten von Bindematerial und zum Verknüpfen der Enden der Längenabschnitte des Bindematerials zum Abschluss der Formung des Ballens;
- einem Ballenlängen-Sensor zur Bestimmung der Länge des derzeit geformten Ballens (20);
- einem Steuersystem, das Einrichtungen zum Empfang eines Signals des Ballenlängen-Sensors umfasst, das die Länge des derzeit geformten Ballens (20) anzeigt, und das betreibbar ist, um das Knüpfersystem zu triggern, um einen neuen Ballen zu beginnen, wenn der derzeit geformte Ballen eine vorgegebene gewünschte Länge erreicht;
**dadurch gekennzeichnet, dass** das Steuersystem weiterhin Einrichtungen umfasst, die von dem Fahrer ein Signal empfangen, das die Menge des Erntematerials (20) vorhersagt, das zum Pressen vor der Fertigstellung eines Arbeitsauftrags verbleibt, und das betreibbar ist, um das Knüpfersystem in einer derartigen Weise zu triggern, dass alle nach dem Empfang des Vorhersagesignals fertiggestellten Ballen eine vorgegebene minimale Länge bei Abschluss des Arbeitsauftrags überschreiten.

3. Rechteck-Ballenpresse nach Anspruch 2, **dadurch gekennzeichnet, dass** das Steuersystem weiterhin betreibbar ist, um das Knüpfersystem in einer derartigen Weise zu triggern, dass alle Ballen, die nach Empfang des Vorhersagesignals fertiggestellt werden, die vorgegebene gewünschte Länge nicht überschreiten.

4. Rechteck-Ballenpresse nach Anspruch 2 oder 3, **dadurch gekennzeichnet, dass** das Vorhersagesignal von dem Fahrer erzeugt wird, um anzuzeigen, dass die Menge an Erntematerial (26), das für das Pressen verbleibt, einem Ballen mit der vorgegebenen gewünschten Länge entspricht.

5. Rechteck-Ballenpresse nach Anspruch 4, **dadurch gekennzeichnet, dass** wenn der derzeit geformte Ballen (20) kürzer als die vorgegebene minimale Länge zu der Zeit ist, zu der das Steuersystem das Vorhersagesignal empfängt, das Steuersystem betreibbar ist, um das Knüpfersystem zu triggern, wenn der derzeit geformte Ballen (20) seine Länge um einen vorgegebenen Wert vergrößert hat.

6. Rechteck-Ballenpresse nach Anspruch 4 oder 5, **dadurch gekennzeichnet, dass** wenn der derzeit geformte Ballen (20) länger als die vorgegebene minimale Länge zu der Zeit ist, zu der das Steuersystem das Vorhersagesignal empfängt, das Steuersystem betreibbar ist, um das Knüpfersystem unmittelbar zu triggern, und um das Knüpfersystem ein zweites Mal zu triggern, wenn der neue geformte Ballen eine Länge erreicht, die der vorgegebenen minimalen Länge entspricht.

7. Rechteck-Ballenpresse nach Anspruch 4 oder 5, **dadurch gekennzeichnet, dass** wenn der derzeit geformte Ballen (20) länger als die vorgegebene minimale Länge zu der Zeit ist, zu der das Steuersystem das Vorhersagesignal empfängt, das Steuersystem betreibbar ist, um das Knüpfersystem zu triggern, wenn der derzeit geformte Ballen die vorgegebene gewünschte Länge erreicht.

## Revendications

1. Procédé pour commander une ramasseuse-presse à balles rectangulaires, dans lequel :
- la longueur de la balle (20) en progression est déterminée par un capteur de longueur de balle,
- le produit agricole (26) restant à mettre en balles avant l'achèvement d'un ouvrage est prédit par le conducteur, et
- en fonction de la prédiction et de la longueur de la balle (20) en progression, un système de commande vérifie que toutes les balles parachevées après la réception du signal de prédiction dépassent une longueur minimale prédéterminée à la fin de l'ouvrage.

2. Ramasseuse-presse à balles rectangulaires comprenant :
- un système de liage pour encercler les balles avec des morceaux de ficelle et nouer ensemble les extrémités des morceaux de ficelle pour achever la formation de la balle,
- un capteur de longueur de balle pour déterminer la longueur de la balle (20) en progression, et
- un système de commande qui comprend un dispositif pour recevoir un signal du capteur de longueur de balle indiquant la longueur de la balle (20) en progression et qui est opérationnel pour déclencher le démarrage d'une nouvelle balle par le système de liage lorsque la balle en progression atteint une longueur souhaitée prédéterminée,
**caractérisée en ce que** le système de commande comprend en plus un dispositif pour recevoir du conducteur un signal prédisant la quantité de produit agricole (26) restant à mettre en balle avant d'achever un ouvrage et est opérationnel pour déclencher le système de liage de telle sorte que toutes les balles achevées après la réception du signal de prédiction dépassent une longueur minimale déterminée à l'achèvement de l'ouvrage.

3. Ramasseuse-presse à balles rectangulaires selon la revendication 2, **caractérisée en ce que** le système de commande est fonctionnel en plus pour déclencher le système de liage de telle manière que toutes les balles parachevées après la réception du signal de prédiction ne dépassent pas la longueur souhaitée prédéterminée.

4. Ramasseuse-presse à balles rectangulaires selon la revendication 2 ou 3, **caractérisée en ce que** le signal de prédiction est généré par le conducteur pour indiquer que la quantité de produit agricole (26) restant à mettre en balles correspond à une balle de la longueur souhaitée prédéterminée.

5. Ramasseuse-presse à balles rectangulaires selon la revendication 4, **caractérisée en ce que** si la balle (20) en progression est plus courte que la longueur minimale prédéterminée au moment où le système de commande reçoit le signal de prédiction, le système de commande est fonctionnel pour déclencher le système de liage lorsque la balle (20) en progression a augmenté en longueur d'une valeur prédéterminée.

6. Ramasseuse-presse à balles rectangulaires selon la revendication 4 ou 5, **caractérisée en ce que** si la balle (20) en progression est plus longue que la longueur minimale prédéterminée au moment où le système de commande reçoit le signal de prédiction, le système de commande est fonctionnel pour déclencher le système de liage immédiatement et pour déclencher le système de liage une seconde fois lorsque la nouvelle balle en progression atteint une longueur correspondant à la longueur minimale prédéterminée.

7. Ramasseuse-presse à balles rectangulaires selon la revendication 4 ou 5, **caractérisée en ce que** si la balle (20) en progression est plus longue que la longueur minimale prédéterminée au moment où le système de commande reçoit le signal de prédiction, le système de commande est fonctionnel pour déclencher le système de liage lorsque la balle en progression atteint la longueur souhaitée prédéterminée.
